**Europäisches Patentamt**

**European Patent Office**

**Office européen des brevets**

(11) Veröffentlichungsnummer: **0 135 642**
**A1**

(12) **EUROPÄISCHE PATENTANMELDUNG**

(21) Anmeldenummer: **83710052.8**

(22) Anmeldetag: **05.08.83**

(51) Int. Cl.⁴: **H 04 N 17/04, H 01 J 9/44**

(43) Veröffentlichungstag der Anmeldung: **03.04.85**
**Patentblatt 85/14**

(71) Anmelder: **Deutsche ITT Industries GmbH,**
**Hans-Bunte-Strasse 19 Postfach 840, D-7800 Freiburg**
**(DE)**

(84) Benannte Vertragsstaaten: **DE**

(71) Anmelder: **ITT INDUSTRIES INC., 320 Park Avenue, New**
**York, NY 10022 (US)**

(84) Benannte Vertragsstaaten: **FR GB IT NL**

(72) Erfinder: **Micic, Ljubomir, Dipl.-Ing., Sundgauallee 15,**
**D-7800 Freiburg (DE)**
Erfinder: **Burth, Rolf-Dieter, Dipl.-Ing., Wannenweg 11b,**
**D-7830 Emmendingen-Windenreute (DE)**
Erfinder: **Fischer, Thomas, Dr., In der Breite 44,**
**D-7801 Umkirch (DE)**
Erfinder: **Schweer, Rainer, Dr., Alemannenstrasse 45,**
**D-7801 Mengen (DE)**

(74) Vertreter: **Stutzer, Gerhard, Dr. et al, Deutsche ITT**
**Industries GmbH Patent- und Lizenzabteilung**
**Hans-Bunte-Strasse 19 Postfach 840, D-7800 Freiburg**
**(DE)**

(84) Benannte Vertragsstaaten: **DE FR GB IT NL**

(54) **Sensorsystem für Fernsehbildröhren.**

(57) Das Sensorsystem dient dem automatischen Abgleich des Ablenksystems von Fernsehbildröhren (1) bezüglich der Ost/West- und Kissenkorrektur. Hierzu ist zur Vermeidung eines in diesem Zusammenhang bekannten motorangetriebenen Sensors oder eines aus über 100 Photodioden gebildeten linienförmigen Sensors vorgesehen, daß das Sensorsystem einen am Rande des Bildschirms (2) im Ablenkbereich des Elektronenstrahls angeordneten rechteckförmigen Rahmen (3) aus einer streifenförmigen Anordnung von regelmässig abwechselnd strahlungdurchlässigen und strahlungsundurchlässigen Segmenten (4, 5) bildet. Bei einer ersten Ausführungsform ist am Rand des Bildschirms (2) eine Leitbahn (6) mit äußerem Anschluß (7) geführt, die in regelmäßigen Abständen durch untereinander gleich große Metallflächen (9) zur Kathode der Fernsehbildröhre (1) hin abgeschirmt ist. Diese Anordnung ist auf der Innenseite des Bildschirms angeordnet.

Bei einer zweiten Ausführungsform ist eine Lichtleiteranordnung mit an mindestens einer Ecke angebrachtem lichtempfindlichen Bauelement vorgesehen.

0135642

L. Micic et al 23-21-3-1

Fl 1195 EP
25. Juli 1983
Mo/bk

## Sensorsystem für Fernsehbildröhren

Die Erfindung betrifft ein Sensorsystem für den automatischen Abgleich von Fernsehbildröhren-Ablenksystemen bezüglich Ost/West- und Kissenkorrektur. Ein derartiges Sensorsystem ist in der Offenlegungsschrift DE 28 05 691 A1, die der US-PS 42 77 797 entspricht, vorbeschrieben. Es arbeitet mit einem Abgleichrechner, einem Bildmustergenerator, einem Speicher und einer digitalen Ablenksteuereinheit derart zusammen, daß die abmessungsbedingten Geometriefehler der Fernsehbildröhre elektronisch derart kompensiert werden, daß das dargestellte Schirmbild davon unbeeinflußt wiedergegeben wird. Das System nimmt also sowohl die Ost/West- als auch die Kissenkorrektur vor. Als Sensorsystem kann in der vorbeschriebenen Anordnung beispielsweise eine Photodiode dienen, die mittels eines Motors auf einer Schiene z.B. am linken Bildrand mit einer festgelegten Geschwindigkeit von oben nach unten bewegt wird, vgl. Seite 32 von DE 28 05 691 A1. Als Alternative hierzu ist auf Seite 33 a.a.O. angegeben, daß eine Leiste mit 156 Photodioden vorgesehen werden kann, die dann nicht von einem Motor angetrieben zu werden braucht, sondern ortsfest ist.

Dieses vorbeschriebene Sensorsystem ist recht aufwendig, da es entweder einen Motorantrieb benötigt oder aus einer großen Anzahl von Photodioden bestehen muß.

Die Aufgabe der in den Ansprüchen gekennzeichneten Erfindung besteht daher darin, ein einfacheres Sensorsystem für den automatischen Abgleich von Fernsehbildröhren-Ablenksystemen

L. Micic et al 23-21-3-1                    Fl 1195 EP

anzugeben, das weder motorbetrieben ist, noch eine große Anzahl von Photodioden erfordert.

Der Hauptvorteil der Erfindung liegt somit bereits in der Lösung der gestellten Aufgabe, nämlich darin, daß nur wenige Photodioden und eine spezielle Lichtleiteranordnung erforderlich sind, oder daß das Sensorsystem gewissermaßen als zusätzliche Elektrodenanordnung in die Fernsehbildröhre integriert werden kann.

Die Erfindung wird nun anhand der Figuren der Zeichnung näher erläutert.

Fig. 1   zeigt ein erstes Ausführungsbeispiel der Erfindung,
Fig. 2   zeigt ein zweites Ausführungsbeispiel der Erfindung,
Fig. 3   zeigt den Querschnitt durch die Anordnung nach Fig. 2 entlang der dortigen strichpunktierten Linie,
Fig. 4   zeigt ausschnittsweise die erfindungsgemäße Anordnung zusammen mit einem entsprechenden Bildmuster, und
Fig. 5   zeigt die erfindungsgemäße Anordnung zusammen mit einem anderen Bildmuster.

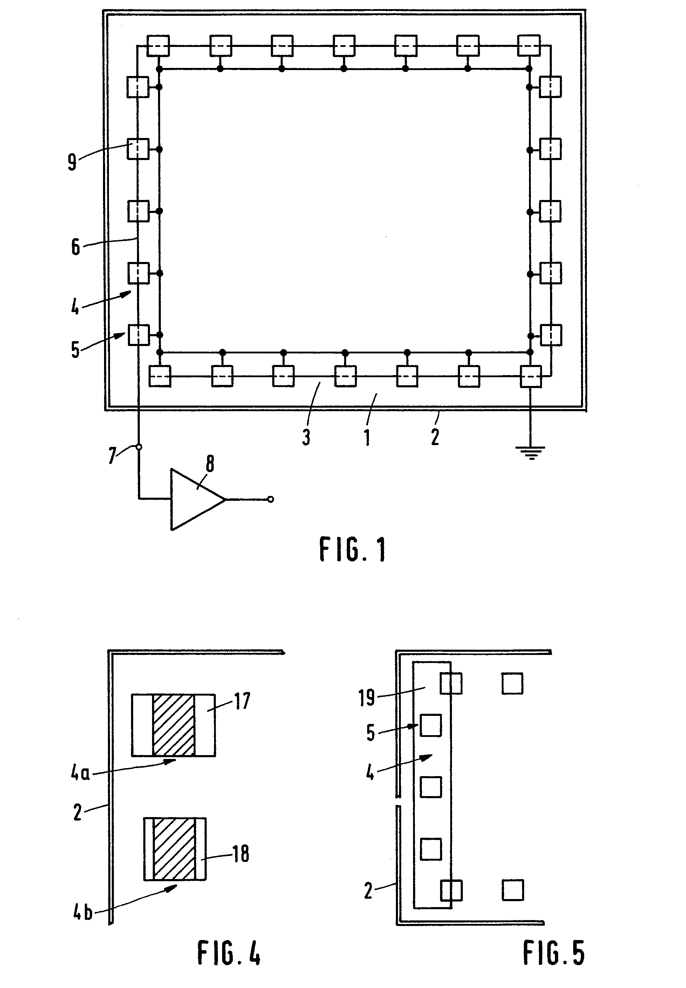

Die Fig. 1 zeigt schematisch ein erstes Ausführungsbeispiel der Erfindung. Die Fig. 1 zeigt den Blick aus Richtung Kathode der Fernsehbildröhre 1 auf die Innenseite von deren Bildschirm 2. An dessen Rand ist noch im Ablenkbereich des Elektronenstrahls der rechteckförmige Rahmen 3 aus einer streifenförmigen Anordnung von regelmäßig abwechselnd strahlungsdurchlässigen und strahlungsundurchlässigen Segmenten 4, 5 angeordnet. Im Ausführungsbeispiel der Fig. 1 bestehen die strahlungsundurchlässigen Segmente 5 aus in regelmäßigen Abständen angeordneten und gleichgroßen

L. Micic et al 23-21-3-1                    Fl 1195 EP

Metallflächen 9. Durch die dazwischen liegenden strahlungsdurchlässigen Segmente 4 und unter den Metallflächen 9
hindurch ist die Leitbahn 6 geführt, die über den äußeren
Anschluß 7 mit dem möglichst hochohmigen Eingang des Verstärkers 8 verbunden ist, so daß an dessen Ausgang elektrische Impuls abgenommen werden können, die bei Auftreffen des Elektronenstrahls auf die Leitbahn 6 entstehen. Durch die Metallflächen 9 ist die Leitbahn 6
gegen die Kathode der Fernsehbildröhre 1 hin elektrisch
abgeschirmt, da alle Metallflächen 9 elektrisch leitend
untereinander verbunden sind und im Betrieb am Schaltungsnullpunkt liegen.

Aus Gründen der einfachen zeichnerischen Darstellung ist
die Verbindungsleitung der einzelnen Metallflächen 9 in
Fig. 1 innerhalb des von innen gebildeten Rahmens 3 gezeichnet, was jedoch keine Einschränkung bedeuten soll;
selbstverständlich kann diese Verbindungsleitung auch auf
der anderen Seite der Metallfächen 9 angebracht werden
oder sogar im vorderen Teil des Bildröhrenhalses, jedoch
außerhalb der dort üblicherweise vorhandenen Beschleunigungselektrode verlaufen. Die Leitbahn 6 und die Metallfächen 9
sowie deren Verbindungsleitung können beispielsweise entsprechend dimensionierte aufgedampfte Metallschichten sein,
wobei Leitbahn 6 und Metallflächen 9 in ihrem Überdeckungsbereich durch eine Isolierschicht elektrisch voneinander
zu trennen sind.

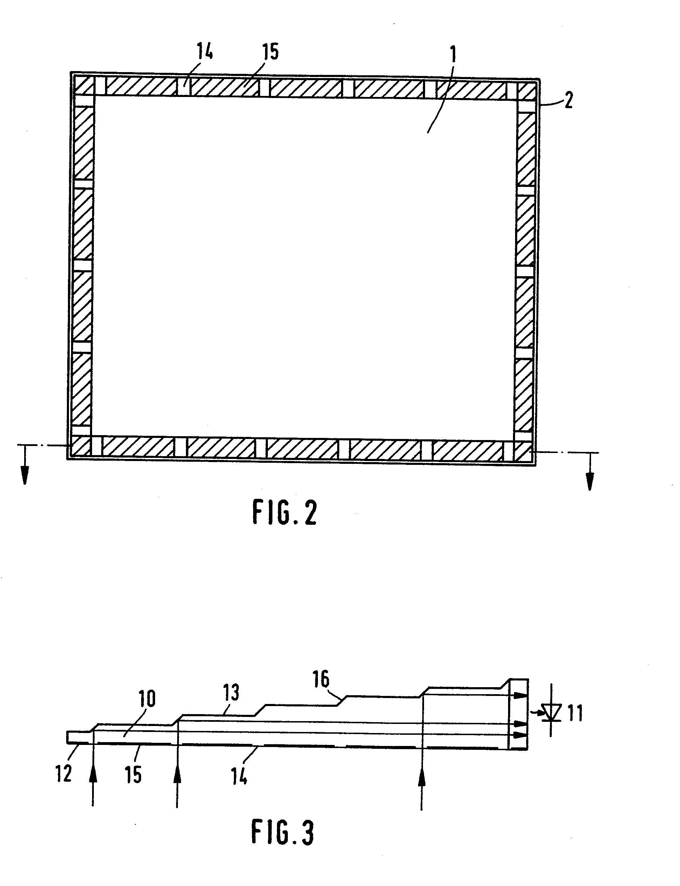

Während das Ausführungsbeispiel der Fig. 1 eine Anordnung
zeigt, die innerhalb der Fernsehbildröhre auf der Innenseite des Bildschirms an dessen Rand angebracht ist  und
somit bei der Herstellung der Fernsehbildröhre bereits
vorzusehen ist, zeigt das zweite Ausführungsbeispiel der
Erfindung nach Fig. 2 eine Anordnung, die nachträglich

L. Micic et al 23-21-3-1                    Fl 1195 EP

auf die Außenseite des Bildschirms von üblichen Fernsehbildröhren aufgebracht werden kann. Dabei handelt es
sich um die Lichtleiteranordnung 10 mit mindestens einem
zugeordneten lichtempfindlichen Bauelement 11. Die Einzelheiten der Lichtleiteranordnung 10 sind aus der Querschnittsdarstellung der Fig. 3 besser als aus Fig. 2 zu erkennen,
wobei dieser Querschnitt entlang der strichpunktierten
Linie von Fig. 2 gezeigt ist.

Die Lichtleiteranordnung 10 hat auf der am Bildschirm 2
anliegenden einen Fläche 12 wiederum strahlungsdurchlässige
und strahlungsundurchlässige Segmente, nämlich die lichtdurchlässigen Sektoren 14 und die lichtundurchlässigen
Sektoren 15. Die der Fläche 12 gegenüberliegende andere
Fläche 13 der Lichtleiteranordnung 10 hat über den lichtundurchlässigen Sektoren 15 dazu parallele Teilflächen
und über den lichtdurchlässigen Sektoren 14 derart geneigte und ggf. innen verspiegelte Teilflächen 16, daß
das vom Bildschirm durch die lichtdurchlässigen Sektoren 14
fallende Licht bis zum lichtempfindlichen Bauelement 11
weitergeleitet wird.

In der schematischen Darstellung der Fig. 3 sind die geneigten Teilflächen 16 unter einem Winkel von 45° bezüglich der Fläche 12 gezeichnet, so daß das durch die lichtdurchlässigen Sektoren 14 fallende Licht um 90° in der
Zeichnung nach rechts zum lichtempfindlichen Bauelement 11
hin abgelenkt wird. Es sind jedoch auch andere Konstruktionen
möglich, wobei die Teilflächen 16 einen von 45° abweichenden Winkel aufweisen, etwa so, daß das von ihnen reflektierte Licht auf die dann innen verspiegelten lichtundurchlässigen Sektoren 15 und von dort auf die ebenfalls
dann innen verspiegelten Teilflächen 13 fällt und so
                                        zum lichtempfindlichen Bauelement 11 weitergeleitet wird.

Das Sensorsystem nach der Erfindung wird, wie bereits eingangs erwähnt wurde, beim automatischen Abgleich bezüglich Ost/West- oder Kissenkorrektur zusammen mit einem Bildmustergenerator angewendet. In Fig. 4 ist stark schematisch gezeigt, welche Form ein solches Bildmuster haben kann. In Fig. 4 ist gegenüber Fig. 1 vergrößert die linke obere Bildecke ausschnittsweise und nicht maßstäblich gezeigt, und zwar mit zwei lichtdurchlässigen Segmenten 4a, 4b (schraffiert).Das Segment 4a ist von einem doppelt so breiten hellen Bildmuster 17 zentrisch überdeckt, während das Segment 4b von einem schmaleren Bildmuster 18 zentrisch überdeckt ist. Durch die unterschiedlich breiten Bildmuster 17, 18 soll erläutert werden, daß der Bildmustergenerator zunächst breite, helle Bildmuster entsprechend dem Bildmuster 17 für alle vertikalen Segmente 4 erzeugt und diese Breite dann entsprechend dem Bildmuster 18 bis auf die Breite der Segmente 4 schrittweise reduziert. Wenn zu Beginn des automatischen Abgleichs zunächst eine Kalibrierung mittels$^{zu}$ den lichtdurchlässigen Segmenten 4 flächengleichen Bildmustern vorgenommen wird, wobei das Bildmuster dunkel ist und die dabei auftretenden Ausgangssignale des Sensorsystems als Minimalwerte gespeichert werden, kann durch die erwähnte schrittweise Reduzierung der Fläche heller Bildmuster anschließend durch Ermittlung der Maximalwerte am Ausgang des Sensorsystems und entsprechende Beeinflussung des Ablenksystems über den Abgleichrechner die durch den nichtsphärischen Bildschirm hervorgerufene Abweichung kompensiert werden.

Während nach Fig. 4 durch die jeweils nur die lichtdurchlässigen Segmente 4 überdeckenden Bildmuster 17, 18 eine Mittenjustierung des Bildes auf dem Bildschirm vom Bildschirmrand aus erfolgt, läßt sich mit dem in Fig. 5 ge-

0135642

zeigten Bildmuster 19 in Form eines vertikalen Streifens die Ost/West-Korrektur vornehmen. Bei der Kalibrierung wird das Bildmuster 19 zunächst als helles Muster erzeugt, und es werden die dabei am Sensorausgang auftretenden Signale gespeichert. Ebenso werden die bei dunklen Bildmustern 19 auftretenden Daten gespeichert. Dann wird wiederum iterativ durch schrittweise Verkleinerung des hellen Bildmusters 19 der entsprechende Maximalwert festgestellt, welcher als Maß für den richtigen Abgleich dient. Für jeden der beiden Ränder der Fernsehbildröhre ist dieser Abgleich getrennt vorzunehmen.

Da in heutigen Fernsehempfängern bereits Mikroprozessoren eingesetzt werden, insbesondere in solchen mit digitaler Signalverarbeitung, kann dieser automatische Abgleich ebenfalls von einem entsprechend programmierten Mikroprozessor vorgenommen werden. Dabei kann nach jedem Einschalten des Fernsehempfängers der Abgleichdurchlauf erfolgen; es ist jedoch auch möglich ggf. nach jeder Kanalwahl den Abgleichdurchlauf vorzunehmen.

L. Micic et al 23-21-3-1

Fl 1195 EP
25. Juli 1983
Mo/bk

Patentansprüche

1. Sensorsystem für den automatischen Abgleich des Ablenksystems von Fernsehbildröhren (1) bezüglich Ost/West- und Kissenkorrektur, dadurch gekennzeichnet, daß es einen am Rande des Bildschirms (2) im Ablenkbereich des Elektronenstrahls angeordneten rechteckförmigen Rahmen (3) aus einer streifenförmigen Anordnung von regelmäßig abwechselnd strahlungsdurchlässigen und strahlungsundurchlässigen Segmenten (4, 5) bildet.

2. Sensorsystem nach Anspruch 1, gekennzeichnet durch folgende Merkmale:
   - es ist innerhalb der Fernsehbildröhre (1) angeordnet,
   - dem Rand des Bildschirms (2) entlang ist eine Leitbahn (6) geführt, die einen äußeren Anschluß (7) zur Verbindung mit einem möglichst hochohmigen Verstärkereingang aufweist, und
   - in regelmäßigen Abständen ist die Leitbahn (6) durch untereinander gleich große Metallflächen (9) zur Kathode der Fernsehbildröhre (1) hin abgeschirmt, die untereinander elektrisch leitend verbunden sind und im Betrieb am Schaltungsnullpunkt liegen.

3. Sensorsystem nach Anspruch 1, gekennzeichnet durch folgende Merkmale:
   - es besteht aus einer auf der Außenseite der Fernsehbildröhre (1) angebrachten Lichtleiteranordnung (10) und mindestens einem lichtempfindlichen Bauelement (11), das an mindestens einer Ecke der Lichtleiteranordnung (10) angebracht ist,

- die Lichtleiteranordnung (10) hat auf der am Bildschirm (2) anliegenden einen Fläche (12) abwechselnd lichtdurchlässige und lichtundurchlässige Sektoren (14, 15), und

- die der einen Fläche (12) gegenüberliegende andere Fläche (13) der Lichtleiteranordnung (10) hat über den lichtundurchlässigen Sektoren (15) dazu parallele Teilflächen und über den lichtdurchlässigen Sektoren (14) derart geneigte und ggf. innenverspiegelte Teilflächen (16), daß das durchfallende Licht bis zum lichtempfindlichen Bauelement (11) weitergeleitet wird.

1/2

0135642

FIG. 1

FIG. 4

FIG. 5

FIG.2

FIG.3

Europäisches
Patentamt

EUROPÄISCHER RECHERCHENBERICHT

0135642

Nummer der Anmeldung

EP 83 71 0052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | US-A-4 277 797 (R. DANGSCHAT u.a.) <br> * Zusammenfassung; Figur 1 * | 1 | H 04 N 5/13 <br> H 01 J 9/44 |
| A | US-A-4 181 398 (E. SICK) <br> * Spalte 4, Zeilen 32-59; Figur 1 * | 3 | |
| A | US-A-3 860 814 (D.M. KLANG) <br> * Spalte 2, Zeile 54 - Spalte 3, Zeile 8 * | 3 | |
| | ----- | | RECHERCHIERTE SACHGEBIETE (Int. Cl. ³) <br><br> H 04 N 5/00 <br> H 01 J 9/00 |

Der vorliegende Recherchenbericht wurde für alle Patentansprüche erstellt.

| Recherchenort <br> DEN HAAG | Abschlußdatum der Recherche <br> 27-03-1984 | Prüfer <br> ANTHONY R.G. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82